# DEMANDE DE BREVET EUROPEEN

(11) **EP 0 957 002 A1**
(43) Date de publication de la demande: **17.11.1999**
(21) Numéro de dépôt: 99401097.3
(22) Date de dépôt: 05.05.1999
(51) Int. Cl.: B60R 9/058

(54) **Support de barre de toit pour véhicule automobile**

(30) Priorité: 13.05.1998 FR 9806033
(71) Demandeur: RAPID S.A., F-75017 Paris (FR)
(72) Inventeur: Leon, Jean-Pierre René, 78800 Houilles (FR); Balibrea, Jean, 95430 Auvers sur Oise (FR)
(74) Mandataire: Corret, Hélène

(57) **Abrégé**

L'invention concerne un support de barre de toit (1) pour véhicule automobile, comportant des moyens pour la fixation amovible de la barre de toit sur le véhicule.

Selon l'invention, ces moyens de fixation comprennent une tirette (4) montée coulissante sur ledit support (3), lequel peut être monté sur au moins un ergot (20, 21) ou analogue solidaire du véhicule, de telle sorte que dans une position déverrouillée de la tirette, le support peut être librement retiré du véhicule et, dans une position verrouillée de la tirette, le support est fixé sur le pavillon.

L'invention s'applique aux véhicules automobiles.

## Description

L'invention concerne une barre de toit pour véhicule automobile, destinée à supporter des bagages, et plus particulièrement un support d'une telle barre de toit pour sa fixation amovible sur le pavillon d'un véhicule.

Une barre de toit comporte un tel support à chacune de ses extrémités.

De façon classique, chaque support est fixé sur le pavillon du véhicule automobile, notamment par des vis passant dans des orifices ménagés dans le support et vissées dans la caisse du véhicule.

La fixation de ces supports de barre de toit est souvent délicate, voire compliquée. Elle est parfois peu fiable et agressive pour la peinture du véhicule. De plus, elle nuit à l'étanchéité du véhicule, de l'eau pouvant passer dans les trous de vis réalisés dans la caisse.

L'invention a pour but de pallier ces inconvénients en proposant un support pour barre de toit de véhicule automobile permettant un positionnement précis et immédiat de la barre sur le pavillon, ainsi que son verrouillage de manière simple et fiable, ceci sans risque d'agression de la peinture et de fuite dans le véhicule.

L'invention concerne ainsi un support de barre de toit pour véhicule automobile comportant des moyens pour la fixation amovible de la barre de toit sur le véhicule, caractérisé en ce que lesdits moyens de fixation comprennent une tirette montée coulissante sur ledit support, lequel peut être monté sur au moins un ergot ou analogue solidaire du véhicule, de telle sorte que dans une position déverrouillée de la tirette, le support peut être librement retiré du véhicule et dans une position verrouillée de la tirette, le support est fixé sur le pavillon.

De préférence, les moyens de fixation comprennent également au moins un trou pratiqué dans le support et susceptible de recevoir ledit ergot ou analogue comportant une gorge, ladite tirette comportant également au moins un trou, ledit ergot pouvant traverser le trou du support et celui de la tirette lorsque le support est placé sur le pavillon du véhicule et le trou de la tirette ayant une forme telle que dans la position verrouillée de la tirette, le bord du trou de la tirette coopère avec la gorge de l'ergot pour fixer le support sur le pavillon.

De façon préférée, ledit ergot solidaire du véhicule et sa gorge présentant une section circulaire, ledit trou de la tirette comporte une première partie sensiblement circulaire dont le diamètre est légèrement supérieur à celui de l'ergot, cette première partie se prolongeant par une deuxième partie dont la largeur correspond au diamètre de la gorge dudit ergot.

La deuxième partie du trou de la tirette présente avantageusement un fond de forme arrondie pour épouser la forme de la gorge dudit ergot.

De préférence, ledit support comporte ainsi que ladite tirette, deux trous pour deux ergots ou analogues solidaires du véhicule.

Dans un mode préféré de réalisation, le support comporte également une patte élastique coopérant avec la tirette et qui est portée par les moyens assurant le montage coulissant de la tirette sur le support.

De préférence, ladite patte élastique porte un ergot et ladite tirette comporte deux orifices destinés à coopérer avec l'ergot de la patte élastique, pour assurer le maintien de la tirette dans chacune de ses deux positions.

De manière avantageuse, la forme de l'ergot porté par la patte élastique est telle que le passage de la position déverrouillée à la position verrouillée de la tirette est aisé, tandis que l'ergot s'oppose au passage de la position verrouillée à la position déverrouillée de la tirette.

L'invention concerne également une barre de toit pour véhicule automobile comportant, à chacune de ses extrémités, un support conforme à l'invention.

L'invention sera mieux comprise et d'autres buts, avantages et caractéristiques de celle-ci apparaîtront plus clairement à la lecture de la description qui suit et qui est faite en regard des dessins annexés sur lesquels :
La figure 1 est une vue schématique en perspective d'un véhicule équipé de deux barres de toit selon l'invention.
La figure 2 est une vue éclatée du détail A de la figure 1, représentant le support d'une barre de toit et une partie du pavillon du véhicule.
La figure 3 est une vue similaire à la figure 2, représentant le support selon l'invention, en partie monté.
La figure 4 est une vue en perspective du support de barre de toit selon l'invention, la position déverrouillée étant représentée en traits pointillés et la position verrouillée en trait plein.
La figure 5 est une vue en coupe selon V-V de la figure 4.

Les éléments communs aux différentes figures seront désignés par les mêmes repères.

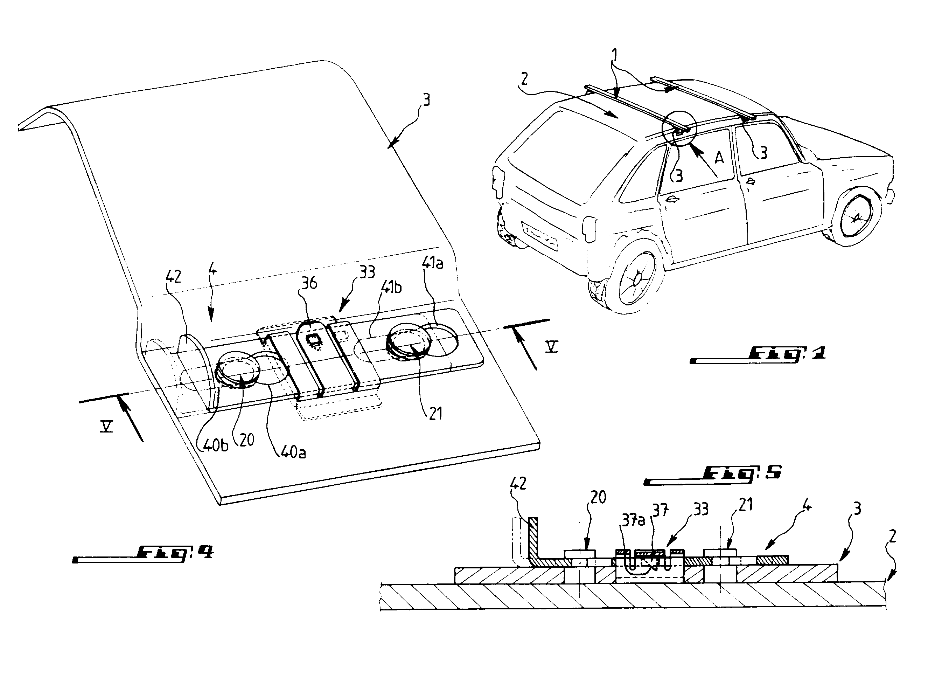

On se réfère tout d'abord à la figure 1 qui montre un véhicule automobile équipé de deux barres de toit 1 montées sur le pavillon 2 du véhicule.

Ces barres de toit s'étendent transversalement et permettent de fixer par exemple des bagages sur le toit du véhicule.

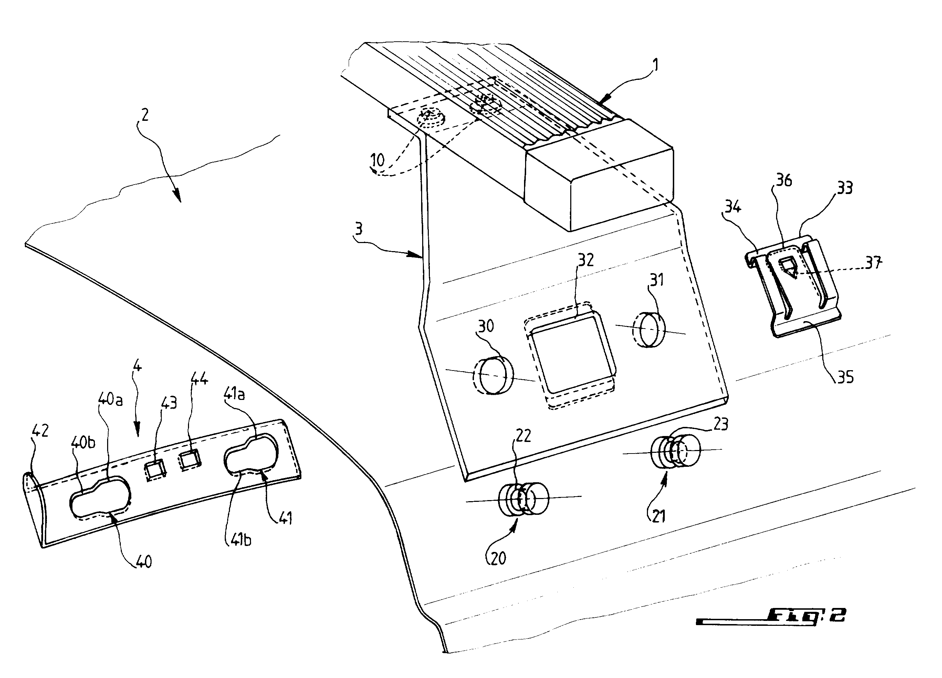

La fixation des barres de toit 1 sur le pavillon 2, est réalisée au moyen de supports 3 qui vont être décrits plus en détail au regard des autres figures. On se reporte tout d'abord à la figure 2 qui est une vue agrandie du détail A de la figure 1.

Ainsi, le pavillon 2 du véhicule comporte, sur son bord longitudinal, deux ergots 20 et 21. Ces deux ergots sont solidaires du pavillon 2 du véhicule et sont écartés l'un de l'autre selon une direction longitudinale du véhicule.

Chacun des ergots présente une section circulaire, avec une gorge 22, 23 concentrique.

Le support 3 de la barre de toit 1 est fixé sur celle-ci par tout moyen approprié, tel que des vis 10.

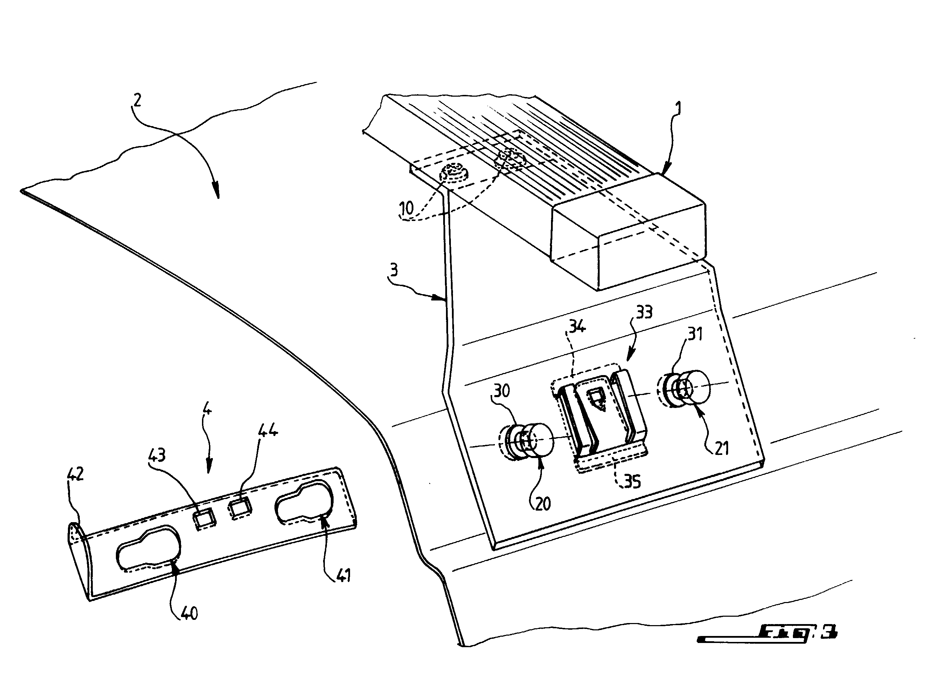

Du côté de son extrémité libre, le support 3 comporte deux trous 30 et 31 qui sont écartés d'une distance correspondant à l'écartement entre les deux ergots 20 et 21. Chacun de ces trous 30, 31 est destiné à recevoir un ergot 20, 21, comme l'illustre par exemple la figure 3.

Le support 3 comporte également entre les deux trous 30 et 31 un orifice 32 de forme sensiblement carrée.

Comme le montre par exemple la figure 3, cet orifice 32 est destiné à recevoir un élément 33 en forme générale de créneau.

Les deux pattes d'extrémité 34 et 35 de cet élément 33 sont destinées à être placées sous le support 3, pour assurer la fixation de l'élément 33 dans l'ouverture 32. La position montée de l'élément 33 est illustrée aux figures 3 à 5.

Cet élément 33 comporte sur le fond du créneau, une patte élastique 36 munie d'un ergot 37.

Le support selon l'invention comporte également une tirette 4 munie de deux trous 40 et 41.

Pour faciliter la manipulation de la tirette, celle-ci est munie d'une languette 42.

La tirette 4 comporte également, entre les trous 40 et 41, deux orifices 43 et 44 qui sont destinés à recevoir l'ergot 37 de la patte élastique 36, comme cela sera décrit dans la suite de la description.

Comme le montrent les figures 2 et 3, la tirette 4 présente de préférence une forme légèrement cintrée pour un effet ressort.

Le support 3 selon l'invention est illustré, à l'état monté, sur la figure 4.

Ainsi, l'élément 33 en forme de créneau est placé dans l'ouverture 32, ses pattes 34 et 35 étant en contact avec la face intérieure du support 3 et la tirette 4 étant montée coulissante sur le support 2, grâce à l'élément 33 qu'elle traverse.

La fixation du support 3 sur le pavillon 2 du véhicule s'effectue de la façon suivante.

La tirette 4 est dans la position illustrée en traits pointillés sur la figure 4.

Dans cette position, la partie circulaire 40a du trou 40, respectivement 41a du trou 41 est en regard des trous 30, respectivement 31 du support 3.

Dans cette position de la tirette, par rapport au support 3, ce dernier peut être librement mis en place ou retiré du pavillon du véhicule.

Cette position correspond donc à une position déverrouillée, dans laquelle la languette est maintenue grâce à la coopération de l'ergot 37 de la patte élastique 36 avec l'évidement 44 de la tirette.

Lorsque l'on souhaite fixer la barre de toit 1 sur le pavillon 2 du véhicule grâce au support 3, la tirette 4 est poussée vers la droite, si l'on considère la figure 4, pour prendre la position illustrée en trait plein.

Dans cette position de la tirette, la deuxième partie 40b du trou 40, respectivement 41b du trou 41 reçoit les ergots 20 et 21 solidaires du véhicule.

Ces deux parties 40b et 41b présentent une largeur correspondant au diamètre de la gorge 22 de l'ergot 20, respectivement 23 de l'ergot 21.

Ainsi, dans cette position de la tirette, correspondant à une position verrouillée, le bord du trou 40b, respectivement 41b coopère avec la gorge 22 de l'ergot 20, respectivement 23 de l'ergot 21. Ceci assure le blocage du support 3 sur les deux ergots 20 et 21.

Cette position est maintenue grâce à la coopération de l'ergot 37 de la patte élastique 36, avec l'évidement 43 de la tirette 4.

Dans les deux positions de la tirette, la patte élastique 36 permet de mieux la plaquer contre le support 3.

Par ailleurs, comme l'illustre plus précisément la figure 5, l'ergot 37 présente une forme particulière de façon à rendre facile le passage de la position déverrouillée à la position verrouillée de la tirette et, au contraire, à s'opposer au passage de la position verrouillée à la position déverrouillée de la tirette.

Ainsi, l'ergot 37 comporte une partie biseautée 37a, qui se trouve du côté de la languette 42, lorsque la tirette 4 est montée dans l'élément 33.

Dans l'exemple illustré sur les figures, le support 3 comporte deux trous 40 et 41, destinés à coopérer avec deux ergots solidaires du véhicule automobile. Cependant, l'invention n'est pas limitée à cet exemple de réalisation et en particulier, le support pourrait ne comprendre qu'un seul trou coopérant avec un ergot solidaire du véhicule.

On peut également noter que de préférence, la deuxième partie 40b du trou 40 de la tirette 4, respectivement la deuxième partie 41b du trou 41, présente un fond de forme arrondie pour coopérer avec la gorge circulaire 22 de l'ergot 20, respectivement 23 de l'ergot 21. L'invention n'est pas limitée à ce mode de réalisation. De même, les ergots et les premières parties 40a du trou 40, respectivement 41a du trou 41 ne sont pas nécessairement de forme circulaire.

Enfin, les signes de référence insérés après les caractéristiques techniques figurant dans les revendications ont pour seul but de faciliter la compréhension de ces dernières et ne sauraient en limiter la portée.

## Revendications

1. Support (3) de barre de toit (1) pour véhicule automobile, comportant des moyens pour la fixation amovible de la barre de toit sur le véhicule, caractérisé en ce que ledit support (3) est fixé sur la barre de toit et en ce que lesdits moyens de fixation comprennent une tirette (4) montée coulissante sur ledit support (3), lequel peut être monté sur au moins un ergot (20, 21) ou analogue solidaire du véhicule, de telle sorte que dans une position déverrouillée de la tirette, le support peut être librement retiré du véhicule et dans une position verrouillée de la tirette, le support est fixé sur le pavillon.

2. Support de barre de toit selon la revendication 1, caractérisé en ce que lesdits moyens de fixation comprennent également au moins un trou (30, 31) pratiqué dans le support (3) et susceptible de recevoir ledit ergot (20, 21) ou analogue comportant une gorge (22, 23), ladite tirette (4) comportant également au moins un trou (40, 41), ledit ergot (20, 21) pouvant traverser le trou (30, 31) dudit support (3) et le trou (40, 41) de la tirette (4), lorsque le support (3) est placé sur le pavillon du véhicule, et le trou (40, 41) de la tirette (4) ayant une forme telle que dans la position verrouillée de la tirette, le bord du trou de la tirette coopère avec la gorge de l'ergot pour fixer le support sur le pavillon.

3. Support de barre de toit selon la revendication 1 ou 2, caractérisé en ce que ledit ergot (20, 21) solidaire du véhicule et sa gorge (22, 23) présentent une section circulaire, ledit trou (40, 41) de la tirette (4) comportant une première partie (40a, 41a) sensiblement circulaire dont le diamètre est légèrement supérieur à celui de l'ergot (20, 21), cette première partie se prolongeant par une deuxième partie (40b, 41b) dont la largeur correspond au diamètre de la gorge dudit ergot.

4. Support de barre de toit selon la revendication 3, caractérisé en ce que la deuxième partie (40b, 41b) du trou (40, 41) de la tirette (4) présente un fond de forme arrondie, pour épouser la forme de la gorge dudit ergot.

5. Support de barre de toit selon l'une des revendications 1 à 4, caractérisé en ce qu'il comporte, comme la tirette (4), deux trous pour deux ergots ou analogues solidaires du véhicule.

6. Support de barre de toit selon l'une des revendications 1 à 5, caractérisé en ce qu'il comporte une patte élastique (36) coopérant avec la tirette (4) et portée par les moyens (33) assurant le montage coulissant de la tirette sur le support.

7. Support de barre de toit selon la revendication 6, caractérisé en ce que ladite patte élastique (36) porte un ergot (37) et en ce que la tirette (4) comporte deux orifices (43, 44) destinés à coopérer avec ledit ergot de la patte, pour assurer le maintien de la tirette dans chacune de ses deux positions.

8. Support de barre de toit selon la revendication 7, caractérisé en ce que la forme de l'ergot (37) de la patte élastique (36) est telle que le passage de la position déverrouillée à la position verrouillée de la tirette est aisé, tandis que l'ergot s'oppose au passage de la position verrouillée à la position déverrouillée de la tirette.

9. Barre de toit pour véhicule automobile comportant un support conforme à l'une des revendications 1 à 8, à chacune de ses extrémités.
